# EUROPÄISCHE PATENTSCHRIFT

(11) **EP 2 580 507 B1**
(45) Veröffentlichungstag und Bekanntmachung des Hinweises auf die Patenterteilung: **17.09.2014**
(21) Anmeldenummer: 10728627.0
(22) Anmeldetag: 11.06.2010
(51) Int. Cl.: F16K 31/124, F16K 31/42, F16K 39/02

(54) **VENTILANORDNUNG**
VALVE DEVICE
DISPOSITIF DE SOUPAPE

(43) Veröffentlichungstag der Anmeldung: 17.04.2013
(73) Patentinhaber: Bühler AG, 9240 Uzwil (CH)
(72) Erfinder: HAUSER, Daniel, 9000 St.Gallen (CH)
(74) Vertreter: Hepp Wenger Ryffel AG
(86) Internationale Anmeldenummer: PCT/EP2010/058263
(87) Internationale Veröffentlichungsnummer: WO 2011/154056

(56) Entgegenhaltungen:
- EP-A1- 0 762 025
- EP-A1- 1 091 131
- DE-A1- 4 129 774
- DE-C1- 19 853 789
- GB-A- 2 332 538
- US-A- 3 561 489

## Beschreibung

Die vorliegende Erfindung betrifft eine Ventilanordnung und ein Verfahren zum Steuern des Durchflusses zwischen einem Hauptströmungskanal und mindestens einem Strömungskanal, sowie eine Verwendung einer Ventilanordnung.

Aus dem Stand der Technik sind verschiedene Ventilanordnungen bekannt. Beispielsweise sind Ventilanordnungen bekannt, welche ein Einbauventil nach DIN ISO 7368 umfassen. Eine solche Ventilanordnung ist in DE 10 2008 059 058 B3 gezeigt. Hierbei wird insbesondere der Einfluss des Arbeitsdruckes, welcher ausgehende von einem Hauptströmungskanal auf eine Stirnfläche des Ventilkolbens wirkt, durch eine entsprechend entgegengesetzte, ebenfalls mit dem Arbeitsdruck beaufschlagte Kompensationsfläche kompensiert. Die gezeigte Ventilanordnung erlaubt keinen Rückschluss auf den Öffnungsgrad des Ventils oder auf die Position des Ventilkolbens.

In EP 0 828 945 B1 wird eine Ventilanordnung gezeigt, welche zusätzlich zur Kompensation des Arbeitsdruckes auch eine direkte Messung der Position des Ventilkolbens erlaubt. So ist an einem dem Hauptanschluss entgegengesetzten Ende des Ventilkolbens eine Messstange befestigt, welche mit einem Wegmesssystem kooperiert. Ein solche Messstange muss jedoch im Ventildeckel beweglich gelagert angeordnet sein, so dass das Wegmesssystem immer auch mit dem Arbeitsdruck beaufschlagt wird. Erfahrungsgemäss sind bekannte Wegmesssysteme darauf eingeschränkt, dass der Betriebsdruck von maximal 420 bar nicht überschritten wird. Somit ist auch der Arbeitsdruck der Ventilanordnungen auf diesen Wert beschränkt.

In der EP 0 762 025 A1 ist ein elektrisch betriebenes,Ventil beschrieben, bei welchem der Endraum des Ventils mit den Strömungskanälen hydraulisch verbunden und somit nicht von diesen fluidisch entkoppelt ist. Eine Wegmessbestimmung des Ventils ist nicht beschrieben.

Es ist Aufgabe der Erfindung, die Nachteile des Standes der Technik zu überwinden. Insbesondere soll eine Ventilanordnung zur Verfügung gestellt werden, welche auch für Arbeitsdrücke in den Strömungskanälen von mehr als 420 bar einsetzbar ist und mit einem herkömmlichen Wegmesssystem, insbesondere mit einem Wegmesssystem mit einem Linear variablen Differential-Transformator (LVDT) kombinierbar ist.

Diese Aufgabe wird durch die im unabhängigen Patentanspruch 1 definierte Ventilanordnung gelöst. Weitere Ausführungsformen ergeben sich aus den abhängigen Patentansprüchen.

Eine erfindungsgemässe Ventilanordnung zum Steuern des Durchflusses zwischen einem Hauptströmungskanal und mindestens einem Strömungskanal weist einen zylinderförmigen Ventilkolben auf, welcher in einer Bohrung eines Ventilblocks zwischen einer Schliessstellung und mindestens einer Offenstellung beweglich angeordnet ist. Zwischen Ventilkolben und Ventilblock und/oder Gehäusedeckel ist ein Ringraum angeordnet. Dieser Ringraum weist einen durchströmbaren Verbindungskanal zum Hauptströmungskanal auf.

Durch die Ausgestaltung der Ventilanordnung mit einem Ringraum und einem Verbindungskanal zum Hauptströmungskanal wird es möglich, die Kraft welche vom Druck des Hauptströmungskanals auf den Ventilkolben wirkt, zu kompensieren.

Dieser Ringraum weist eine Kompensationsfläche auf dem Ventilkolben auf, welche in ihrer Dimension in etwa einer dem Hauptströmungskanal zugeordneten aktiven Querschnittsfläche des Ventilkolbens entspricht. Dabei ist die Kompensationsfläche so angeordnet, dass bei bestimmungsgemässem Gebrauch der Druck vom Hauptströmungskanal auf die Kompensationsfläche in eine Richtung wirkt, welche entgegengesetzt ist zu Richtung des Druckes, welcher auf die aktive Querschnittsfläche wirkt.

Wenn Kompensationsfläche und aktive Querschnittsfläche in etwa dieselbe Dimension aufweisen, kann sichergestellt werden, dass der Ventilkolben im Wesentlichen kraftfrei zwischen der Schliessstellung und der Offenstellung bewegt werden kann. Sowohl an der aktiven Querschnittsfläche als auch an der Kompensationsfläche des Ventilkolbens liegt durch die hydraulische Verbindung der Druck des Hauptströmungskanals an. Durch geeignete Ausgestaltung der Kompensationsfläche kann ein Kräftegleichgewicht zwischen Kompensationsfläche und aktiver Querschnittsfläche hergestellt werden.

Ein Endraum, welcher durch eine der aktiven Querschnittsfläche des Ventilkolbens entgegengesetzte Endfläche gebildet wird, kann von den Strömungskanälen fluidisch entkoppelt sein. Eine solche Entkoppelung hat den Vorteil, dass an dieser Endfläche beispielsweise Messsysteme angeschlossen werden können, welche hoch empfindlich sind und hohen Drücken, wie sie in den Strömungskanälen herrschen, nicht gewachsen sind. Somit ist eine zuverlässige Wegmessung bzw. eine Erkennung der Position des Ventilkolbens möglich.

Ein Wegmesssystem kann an der Endfläche des Ventilkolbens (5) angeordnet sein. Ein solches Wegmesssystem ist dadurch komplett unabhängig von den Arbeitsdrücken der Strömungskanäle.

Die Kompensationsfläche kann kleiner als die aktive Querschnittsfläche sein. Vorzugsweise ist die Kompensationsfläche so ausgebildet, dass diese eine am Ringspalt der Steuerkanten wirkende Strömungskraft bei kleinen Ventilöffnungen kompensiert. Somit wird die Schwingungsneigung solcher Ventilanordnungen verringert.

Wenn für den Einbau des Ventilkolbens keine durchgehende Ventilhülse verwendet sondern die Ventilhülse im Bereich des Strömungskanals aufgetrennt wird, insbesondre auch keinen Strömungswiderstand in Flussrichtung nach der Steuerkante aufweist, kann die Durchflussleistung erhöht werden. So kann der gewünschte Ventildurchfluss mit einer kleineren und daher dynamischeren Ventilanordnung bewältigt werden. Beispielsweise kann bei einer herkömmlichen Ventilanordnung der Nennweite NG50, welche eine durchgehende Ventilhülse aufweist, einzig durch die Verwendung einer nicht durchgehenden Ventilhülse die Nennweite auf NG40 reduziert werden, ohne dass die Durchflussleistung beeinträchtigt wird. Durch diese Verwendung lassen sich insbesondere Regelventile realisieren, welche eine verkürzte Stellzeit aufweisen. Altenativ kann der Ventilkolben auch direkt im Ventilblock eingebaut sein.

Der Ventilkolben kann auf seiner Zylindermantelfläche mehrere Stufen aufweist und dadurch mehrere Ringräume zwischen dem Ventilkolben und dem Ventilblock und/oder dem Gehäusedeckel bilden. Durch diese zusätzlichen Stufen bzw. Ringräume lässt sich der Ventilkolben beispielsweise in seiner Lage steuern.

Ein erster und ein zweiter Ringraum der Ventilanordnung können mit einem Pilotventil zur Steuerung des Ventilkolbens zwischen der Schliessstellung und der Offenstellung verbunden oder verbindbar sein. Alternativ zu einem zweiten Ringraum kann der Endraum mit dem Pilotventil zur Steuerung des Ventilkolbens verbunden oder verbindbar sein. Es ist aber auch denkbar, dass sowohl der Endraum als auch der zweite Ringraum mit dem Pilotventil zur Steuerung des Ventilkolbens verbunden oder verbindbar ist. Wie vorab schon erwähnt, ist für die Steuerung der Bewegung des Ventilkolbens nur eine kleine Kraft nötig, da die Kraft resultierend vom Druck im Hauptströmungskanal auf die aktive Querschnittsfläche des Ventilkolbens durch denselben Druck auf die Kompensationsfläche kompensiert wird. Somit kann der Ventilkolben sehr schnell durch Anlegen entsprechender Steuerdrücke am ersten oder zweiten Ringraum beziehungsweise am ersten Ringraum oder am Endraum verschoben werden. Es sind somit hochdynamische Schaltvorgänge möglich.

Der Endraum kann dabei druckfrei oder höchstens mit dem Steuerdruck vom Pilotventil beaufschlagt sein. Dadurch, dass der Endraum von den Strömungskanälen entkoppelt ist und je nach Ausführungsform ganz druckfrei oder höchstens mit dem Steuerdruck des Pilotventiles belastet ist, kann ein Wegmesssystem verwendet werden, welches nicht den hohen Drücke der Strömungskanäle standhalten muss. Ausserdem kann im Falle der Druckbelastung des Endraumes mit dem Steuerdruck des Pilotventiles, der Druck durch Variation des Durchmessers der Endfläche so eingestellt werden, dass dieser Druck nicht den Betriebsdruck des Wegmesssystems übersteigt. Somit können kostengünstige Wegmesssysteme verwendet werden. Übliche Wegmesssysteme erlauben nur einen maximalen Betriebsdruck bis ca. 420 bar. Mit der erfindungsgemässen Ventilanordnungen sind also auch Drücke in den Strömungskanälen regelbar, welche ein Vielfaches des zulässigen Betriebsdruckes des Wegmesssystems aufweisen.

Die Erfindung betrifft weiter ein Verfahren zum Steuern und/oder Regeln eines Fluidflusses mit einer vorab beschriebenen Ventilanordnung.

Weiter betrifft die Erfindung auch eine Verwendung einer vorab beschriebenen Ventilanordnung zur Steuerung und/oder Regelung eines Ventilflusses.

Weiter betrifft die Erfindung die Verwendung einer vorab beschriebenen Ventilanordnung in Kombination mit einem Wegmesssystem, welches einen maximal zulässigen Betriebsdruck aufweist, in Fluidströmen mit Drücken, welche den maximal zulässigen Betriebsdruck des Wegmesssystems überschreiten.

Das Wegmesssystem kann dabei ein LVDT-Wegmesssystem mit einem maximalen Betriebsdruck von bis zu 350 bar, insbesondere bis zu 400 bar, vorzugsweise bis zu 450 bar sein. Alternativ zu einem LVDT-Wegmesssystem sind auch andere, beispielsweise inkrementelle Wegmesssysteme oder kapazitive Wegmesssysteme mit hoher Auflösung denkbar. Dabei können analoge oder digitale Wegmesssysteme zum Einsatz kommen.

Anhand von Figuren, welche lediglich Ausführungsbeispiele darstellen, wird die Erfindung im Folgenden näher erläutert. Es zeigen:
- Figur 1:: eine schematische Darstellung einer erfindungsgemässen Ventilanordnung in einem 3-Wege-Einbauventil ohne Ventilhülsen,
- Figur 2:: eine alternative Ausführungsform einer erfindungsgemässen Ventilanordnung in einem 3-Wege-Ventil ohne Ventilhülsen in einer schematischen Darstellung,
- Figur 3:: einen Schnitt durch eine erfindungsgemässe Ventilanordnung in einem 2-Wege-Ventil mit nicht durchgehender Ventilhülse,
- Figur 4:: einen Schnitt durch eine erfindungsgemässe Ventilanordnung in einem 3-Wege-Ventil mit nicht durchgehender Ventilhülse.

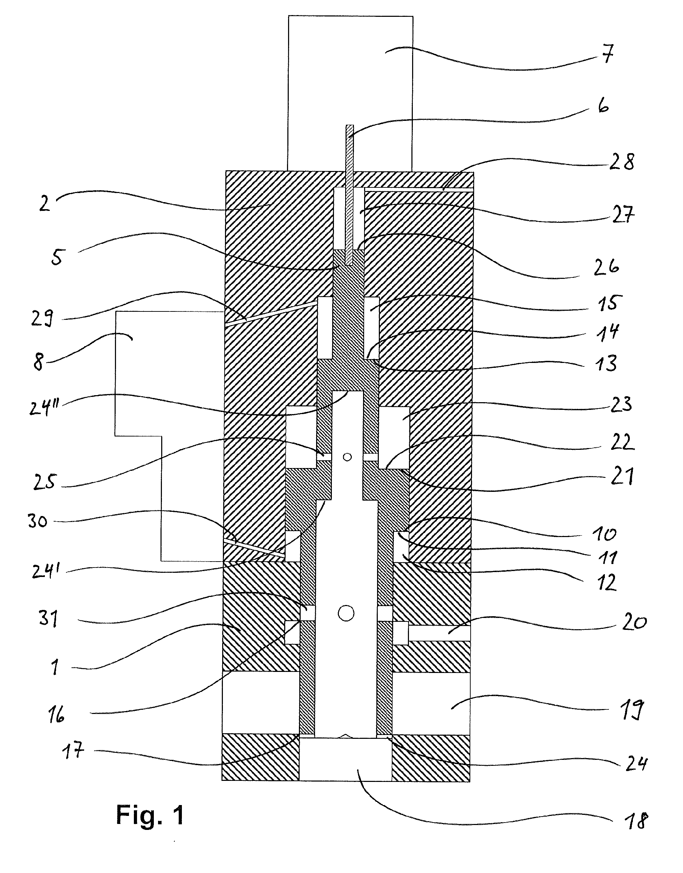

Figur 1 zeigt eine schematische Darstellung einer erfindungsgemässen Ventilanordnung in einem 3-Wege-Einbauventil ohne Ventilhülsen. Ein Ventilkolben 5 ist in einer Durchgangsbohrung eines Ventilblocks 1 angeordnet. Dabei ist der Ventilkolben 5 im Wesentlichen ein einseitig geschlossener Hohlzylinder. Der Ventilkolben ist mit seinem offenen Ende im Ventilblock 1 angeordnet. Das geschlossene Ende des Ventilkolbens 5 ragt aus dem Ventilblock 1 hinaus und wird in einem Gehäusedeckel 2 aufgenommen. Der Ventilblock 1 weist quer zur Durchgangsbohrung zwei Querbohrungen auf, welche in der Ventilanordnung als Strömungskanäle 19, 20 dienen.

In der dargestellten Position ist die Ventilanordnung geschlossen, d.h. der Hauptströmungskanal 18 ist von beiden Strömungskanälen 19, 20 durch den Ventilkolben 5 getrennt. Wird nun der Ventilkolben 5 weiter in den Ventilblock 1 hinein verschoben, so bewegt sich eine Öffnung 31 des Ventilkolben 5 zum Strömungskanal 20 und erlaubt einen Durchfluss vom Haugströmungskanal 18 zum Strömungskanal 20. Je nach Position des Ventilkolbens 5 bzw. der Steuerkante 16 im Verhältnis zur Durchgangsbohrung des Strömungskanals 20 kann der Durchfluss geregelt werden. Der Strömungskanal 19 bleibt dabei getrennt vom Hauptströmungskanal 18. Wenn der Ventilkolben 5 in entgegengesetzter Richtung bewegt wird, öffnet sich der Durchfluss vom Hauptströmungskanal 18 zum Strömungskanal 19. Der Durchfluss kann wiederum durch die Position des Ventilkolbens 5 bzw. der Steuerkante 17 geregelt werden. Der Strömungskanal 20 bleibt dabei jedoch verschlossen.

Der Ventilkolben 5 weist auf seiner Aussenseite mehrere Stufen 10 ,13, 21 auf, welche zusammen mit einer entsprechenden Ausgestaltung des Gehäusedeckels 2 Ringräume 12, 15, 23 bilden. Die Ringräume 12, 15 dienen der Steuerung des Ventilkolbens 5. Entsprechend sind diese Ringräume 12, 15 mit einem Pilotventil 8 verbunden, welches die Verschiebung des Ventilkolbens 5 durch Anlegen eines entsprechenden Steuerdruckes an die Steuerflächen 11, 14 steuert. Um ein Verstellen des Ventilkolbens 5 möglichst mit geringen Steuerdrücken möglich zu machen, ist der Ringraum 23 über eine hydraulische Verbindung 25 mit dem Hauptströmungskanal 18 verbunden. Diese hydraulische Verbindung 25 stellt sicher, dass der Druck im Ringraum 23 demjenigen Druck entspricht, welcher im Hauptströmungskanal 18 herrscht. Die Kraft, welche aus dem auf die aktive Querschnittsfläche 24, 24', 24" des Ventilkolbens 5 wirkenden Druckes resultiert, kann so durch denselben Druck im Ringraum 23, welcher auf die Kompensationsfläche 22 wirkt, kompensiert werden. Die Kompensationsfläche 22 und entsprechend die Stufe 21 sind dabei so dimensioniert, dass die Kompensationsfläche 22 leicht kleiner als die aktive Querschnittsfläche 24, 24', 24" ist. Somit wird die Schwingungsneigung des Ventilkolbens 5 bei kleinen Ventilöffnungen, verursacht durch die am Ringspalt der Steuerkanten (16, 17) wirkende Strömungskraft, reduziert. Die aktive Querschnittsfläche setzt sich zusammen aus den Ringflächen 24, 24' am Ende des Ventilkolbens 5 und an der ersten Stufe im Innern des Ventilkolbens 5, sowie der direkt der Endfläche 26 gegenüberliegenden Fläche 24".

Am geschlossenen Ende des Ventilkolbens 5 wird zwischen Ventilkolben 5 und Gehäusedeckel ein Endraum 27 gebildet. Dieser Endraum 27 verfügt über eine Entlüftung 28 oder ist drucklos mit Tank verbunden, um das Verschieben des Ventilkolbens 5 zu ermöglichen. An der Endfläche 26 des Ventilkolbens 5 ist eine Messtange 6 angeordnet, welche mit einem Wegmesssystem 7 korrespondiert. Üblicherweise kommt eine Wegemessung mithilfe eines Linear variablen Differential-Transformators (LVDT) zum Einsatz, es können jedoch auch andere Wegmesssysteme, beispielsweise inkrementelle oder kapazitive Wegmesssysteme, eingesetzt werden. Durch die konsequente Trennung des Endraumes 27 sowohl vom Arbeitsdruck der Strömungskanäle 18, 19, 20 und von den Steuerungsdrücken des Pilotventils 8 ist der Endraum 27 komplett druckfrei. Das Wegmesssystem 7 muss somit keine speziellen Anforderungen bezüglich seines Betriebsdruckes erfüllen und kann entsprechend günstig ausgestaltet sein. Entsprechend kann die Ventilanordnung zum Regeln von Arbeitsdrücken unabhängig von dem maximal zulässigen Betriebsdruck des Wegmesssystems betrieben werden.

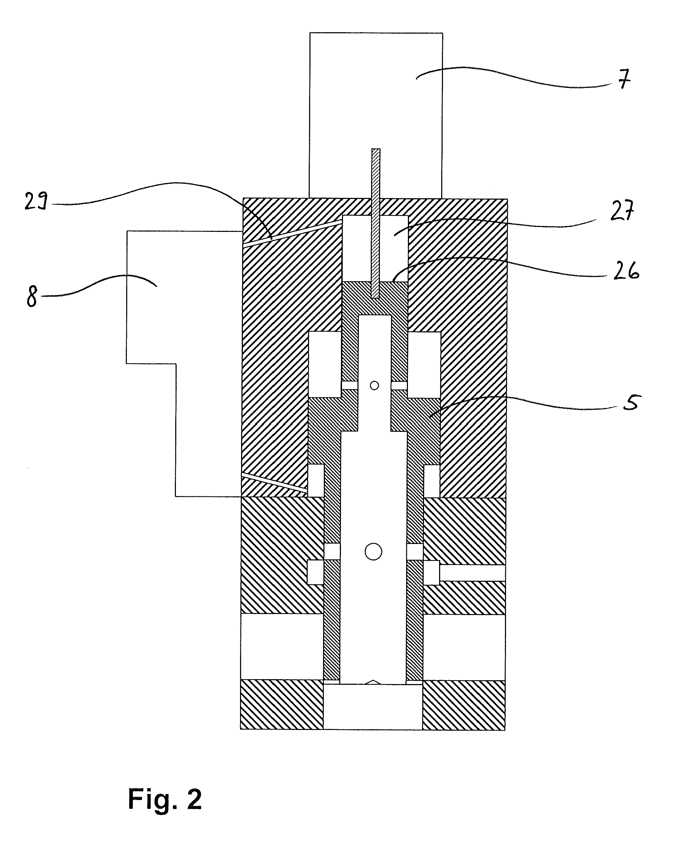

In Figur 2 ist eine alternative Ausführungsform einer erfindungsgemässen Ventilanordnung in einem 3-Wege-Ventil ohne Ventilhülsen in einer schematischen Darstellung gezeigt. Diese Ausführungsform unterscheidet sich von der in Figur 1 beschriebenen Variante dadurch, dass eine Stufe auf der Zylindermantelfläche des Ventilkolbens 5 entfällt. Um jedoch den Ventilkolben weiterhin von einem Pilotventil 8 ansteuern zu können, ist eine Pilotverbindung 29 vom Pilotventil 8 in den Endraum 27 geführt. Entsprechend liegt der Steuerdruck somit an der Endfläche 26 an. Das Wegmesssystem 7 ist somit dem Steuerdruck durch das Pilotventil 8 ausgesetzt. Da bei dieser Ventilanordnung ein Ringraum entfällt, sind kompaktere Ventilanordnungen realisierbar als dies mit der Ventilanordnung gemäss Figur 1 möglich ist. Ansonsten ist der Aufbau der Ventilanordnung beider Varianten identisch.

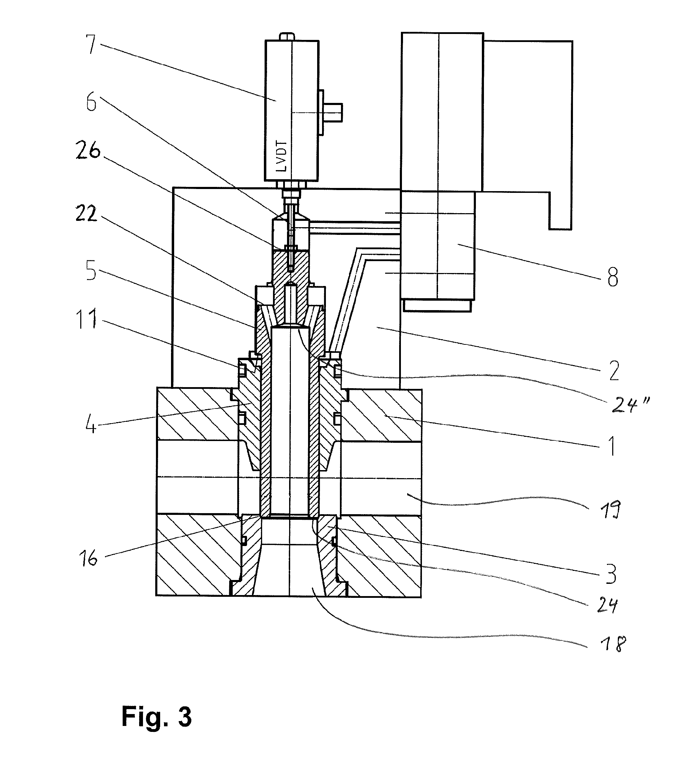

Figur 3 zeigt einen Schnitt durch eine erfindungsgemässe Ventilanordnung in einem 2-Wege-Ventil. Diese Ventilanordnung entspricht im Wesentlichen der Anordnung gemäss Figur 2, der Ventilkolben 5 ist jedoch mittels einer nicht durchgehenden oberen Ventilhülse 4 im Ventilblock 1 geführt. Eine untere Hülse 3 ist als Ventilsitz ausgebildet, um eine leckagefreie Trennung zwischen dem Hauptströmungskanal 18 und dem Strömungskanal 19 zu ermöglichen. Zudem weist die Ventilanordnung nur zwei Strömungskanäle 18, 19 auf. Der Ventilkolben 5 wird durch das Pilotventil 8 gesteuert. Entsprechend den anliegenden Steuerdrücken an der Steuerfläche 11 und der Endfläche 26 bewegt sich der Ventilkolben 5 in eine geöffnete oder eine geschlossene Stellung. Der Arbeitsdruck des Hauptströmungskanals 18 liegt sowohl an der aktiven Querschnittsfläche 24, 24', 24" als auch an der Kompensationsfläche 22 an. Die resultierende Kraft ist dabei über die Dimensionswahl der Kompensationsfläche 22 so eingestellt, dass die Schwingungsneigung bei kleinen Ventilöffnungen minimiert ist. Die Steuerkante 16 wird in der Ausführungsform als 2-Wege-Ventil in geschlossener Stellung auf einen Ventilsitz gedrückt, so dass ein absolut leckagefreies Verschliessen möglich ist. Zur Messung der Ventilöffnung ist auf dem Gehäusedeckel 2 ein Wegmesssystem (LVDT) 7 angeordnet, welches mit einer Messstange 6 mit dem Ventilkolben 5 verbunden ist.

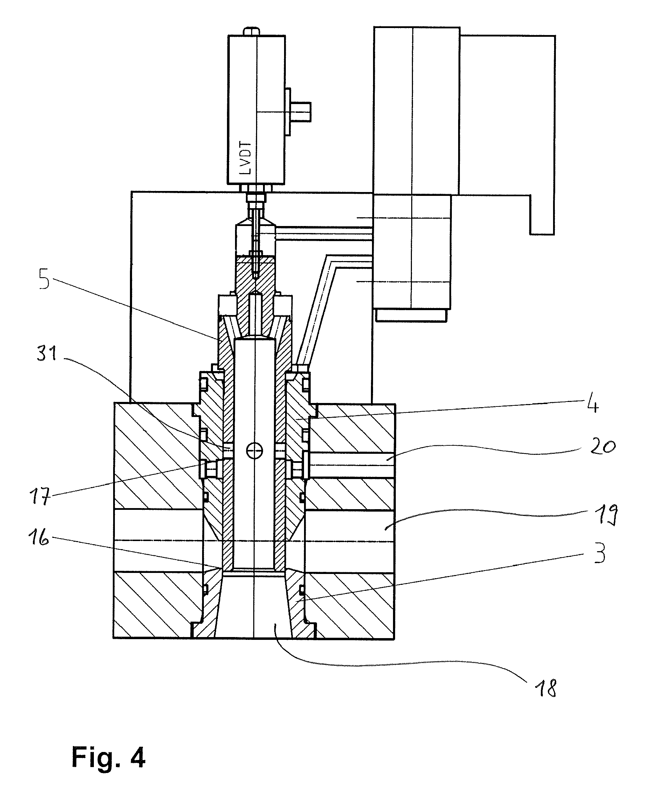

Figur 4 zeigt einen Schnitt durch eine erfindungsgemässe Ventilanordnung in einem 3-Wege-Ventil. Abgesehen vom dritten Strömungskanal 20 und dem entsprechenden Auslass 31 im Ventilkolben 5 entspricht diese Ventilanordnung derjenigen aus Figur 3. Ein weiterer Unterschied ist an der Einlasshülse 3 ersichtlich, diese Einlasshülse 3 bildet kein Sitzventil mit der Steuerkante 16 des Ventilkolbens 5 sondern einen Schiebesitz für den Ventilkolben 5. Der Ventilkolben 5 ist wiederum in einer Führungshülse 4 gelagert. Der Ventilkolben 5 kann nicht nur angehoben werden, was zu einem Durchlass zwischen Hauptströmungskanal 18 und Strömungskanal 19 führt, sondern auch abgesenkt werden. Durch ein Absenken des Ventilkolbens 5 wird ein Durchlass zwischen Hauptströmungskanal 18 und Strömungskanal 20 über den Auslass 31 geöffnet. Die Position der Steuerkante 17 regelt hier den Durchfluss. Die weiteren Funktionen sind identisch zu denjenigen der Figur 3, so dass diese nicht weiter beschrieben werden.

## Patentansprüche

1. Ventilanordnung zum Steuern des Durchflusses zwischen einem Hauptströmungskanal (18) und mindestens einem Strömungskanal (19, 20) mit einem in einer Bohrung eines Ventilblocks (1) und/oder eines Ventildeckels (2) zwischen einer Schliessstellung und mindestens einer Offenstellung beweglich angeordneten zylinderförmigen Ventilkolben (5), wobei ein Ringraum (23) zwischen Ventilkolben (5) und Ventilblock (1) und/oder Gehäusedeckel (2) angeordnet ist und dieser Ringraum einen durchströmbaren Verbindungskanal (25) zum Hauptströmungskanal (18) aufweist, **dadurch gekennzeichnet, dass** ein durch eine der aktiven Querschnittsfläche (24, 24', 24") entgegengesetzten Endfläche (26) des Ventilkolbens (5) einseitig begrenzter Endraum (27) von den Strömungskanälen (18, 19, 20) fluidisch entkoppelt ist.

2. Ventilanordnung nach Anspruch 1, **dadurch gekennzeichnet, dass** der Ringraum (23) eine Kompensationsfläche (22) auf dem Ventilkolben (5) aufweist, welche in ihrer Dimension einer dem Hauptströmungskanal (18) zugeordneten aktiven Querschnittsfläche (24, 24', 24") des Ventilkolbens (5) entspricht, wobei bei bestimmungsgemässem Gebrauch der Druck vom Hauptströmungskanal (18) auf die Kompensationsfläche (22) in eine Richtung wirkt, welche entgegengesetzt ist zu Richtung des Druckes, welcher auf die aktive Querschnittsfläche (24, 24', 24") wirkt.

3. Ventilanordnung nach Anspruch 1 oder 2, **dadurch gekennzeichnet, dass** ein Wegmesssystem (7) an der Endfläche (26) des Ventilkolbens (5) angeordnet ist.

4. Ventilanordnung nach einem der Ansprüche 2 bis 3, **dadurch gekennzeichnet, dass** die Kompensationsfläche (22) kleiner als die aktive Querschnittsfläche (24, 24', 24") ist.

5. Ventilanordnung nach einem der Ansprüche 1 bis 4, **dadurch gekennzeichnet, dass** der Ventilkolben (5) direkt im Ventilblock (1) und/oder Gehäusedeckel (2) eingebaut ist.

6. Ventilanordnung nach einem der Ansprüche 1 bis 5, **dadurch gekennzeichnet, dass** der Ventilkolben (5) auf seiner Zylindermantelfläche mehrere Stufen (10, 13, 21) aufweist und dadurch mehrere Ringräume (12, 15, 23) zwischen dem Ventilkolben (5) und dem Ventilblock (1) und/oder dem Gehäusedeckel (2) bildet.

7. Ventilanordnung nach Anspruch 6, **dadurch gekennzeichnet, dass** ein erster Ringraum (12) mit einem Pilotventil (8) zur Steuerung des Ventilkolbens (5) zwischen der Schliessstellung und der Offenstellung verbunden oder verbindbar ist und dass ein zweiter Ringraum (15) und/oder der Endraum (27) mit dem Pilotventil (8) zur Steuerung des Ventilkolbens (5) zwischen der Schliessstellung und der Offenstellung verbunden oder verbindbar ist.

8. Ventilanordnung nach einem der Ansprüche 1 bis 7, **dadurch gekennzeichnet, dass** bei bestimmungsgemässem Gebrauch der Endraum (27) druckfrei oder höchstens mit dem Steuerdruck vom Pilotventil (8) beaufschlagt ist.

9. Verfahren zum Steuern und/oder Regeln eines Fluidflusses mit einer Ventilanordnung gemäss einem der Ansprüche 1 bis 8, umfassend die Verschiebung des Ventilkolbens (5) von einer Position, in welcher der Hauptströmungskanal (18) von den Strömungskanälen (19, 20) getrennt ist, in eine Position in welcher der Hauptströmungskanal (18) mit einem der Strömungskanäle (19, 20) verbunden ist, wobei die Verschiebung des Ventilkolbens (5) unter Kompensation der vom Druck des Hauptströmungskanals (18) auf den Ventilkolben (5) wirkenden Kraft durch einen Druck in dem mit dem Verbindungskanal (25) mit dem Hauptströmungskanal (18) verbundenen Ringraum (23) und unter fluidischer Entkopplung des Endraums (27) von den Strömungskanälen (18, 19, 20) erfolgt.

10. Verwendung einer Ventilanordnung gemäss einem der Ansprüche 1 bis 8 zur Steuerung und/oder Regelung eines Ventilflusses.

11. Verwendung einer Ventilanordnung gemäss einem der Ansprüche 1 bis 8 mit einem Wegmesssystem, welches einen maximal zulässigen Betriebsdruck aufweist, in Fluidströmen mit Drücken, welche den maximal zulässigen Betriebsdruck des Wegmesssystems überschreiten.

12. Verwendung gemäss Anspruch 11, **dadurch gekennzeichnet, dass** das Wegmesssystem ein LVDT-Wegmesssystem mit einem maximalen Betriebsdruck von bis zu 350 bar, insbesondere bis zu 400 bar, vorzugsweise bis zu 450 bar ist.

13. Verwendung gemäss Anspruch 11 oder 12 zur Verkürzung der Ansprechzeit eines Regelventils.

## Claims

1. Valve arrangement for controlling the throughflow between a main flow channel (18) and at least one flow channel (19, 20) having a cylindrical valve piston (5) which is arranged in a bore of a valve block (1) and/or of a valve cover (2) such that it can be moved between a closed position and at least one open position, an annular space (23) being arranged between the valve piston (5) and valve block (1) and/or housing cover (2), and the said annular space having a connecting channel (25), through which flow can pass, to the main flow channel (18), **characterized in that** an end space (27) which is delimited on one side by an end face (26), opposite to the active cross-sectional area (24, 24', 24"), of the valve piston (5) is decoupled fluidically from the flow channels (18, 19, 20).

2. Valve arrangement according to Claim 1, **characterized in that** the annular space (23) has a compensation face (22) on the valve piston (5), the dimension of which compensation face (22) corresponds to that of an active cross-sectional area (24, 24', 24") of the valve piston (5), which active cross-sectional area (24, 24', 24") is assigned to the main flow channel (18), the pressure from the main flow channel (18) acting, in the case of usage as intended, on the compensation face (22) in a direction which is opposed to the direction of the pressure which acts on the active cross-sectional area (24, 24', 24").

3. Valve arrangement according to Claim 1 or 2, **characterized in that** a distance measuring system (7) is arranged on the end face (26) of the valve piston (5).

4. Valve arrangement according to either of Claims 2 and 3, **characterized in that** the compensation face (22) is smaller than the active cross-sectional area (24, 24', 24").

5. Valve arrangement according to one of Claims 1 to 4, **characterized in that** the valve piston (5) is installed directly in the valve block (1) and/or housing cover (2).

6. Valve arrangement according to one of Claims 1 to 5, **characterized in that** the valve piston (5) has a plurality of steps (10, 13, 21) on its cylinder circumferential face and, as a result, forms a plurality of annular spaces (12, 15, 23) between the valve piston (5) and the valve block (1) and/or the housing cover (2).

7. Valve arrangement according to Claim 6, **characterized in that** a first annular space (12) is connected or can be connected to a pilot valve (8) for controlling the valve piston (5) between the closed position and the open position, and **in that** a second annular space (15) and/or the end space (27) is connected or can be connected to the pilot valve (8) for controlling the valve piston (5) between the closed position and the open position.

8. Valve arrangement according to one of Claims 1 to 7, **characterized in that**, in the case of usage as intended, the end space (27) is pressure-free or at most is loaded with the control pressure by the pilot valve (8).

9. Method for controlling and/or regulating a fluid flow by way of a valve arrangement according to one of Claims 1 to 8, comprising the displacement of the valve piston (5) from a position, in which the main flow channel (18) is disconnected from the flow channels (19, 20), into a position, in which the main flow channel (18) is connected to one of the flow channels (19, 20), the displacement of the valve piston (5) taking place with compensation of the force which acts from the pressure of the main flow channel (18) on the valve piston (5) by way of a pressure in the annular space (23) which is connected to the main flow channel (18) by the connecting channel (25) and with fluidic decoupling of the end space (27) from the flow channels (18, 19, 20).

10. Use of a valve arrangement according to one of Claims 1 to 8 for controlling and/or regulating a valve flow.

11. Use of a valve arrangement according to one of Claims 1 to 8 having a distance measuring system which has a maximum permissible operating pressure, in fluid flows at pressures which exceed the maximum permissible operating pressure of the distance measuring system.

12. Use according to Claim 11, **characterized in that** the distance measuring system is an LVDT distance measuring system having a maximum operating pressure of up to 350 bar, in particular up to 400 bar, preferably up to 450 bar.

13. Use according to Claim 11 or 12 for shortening the response time of a regulating valve.

## Revendications

1. Dispositif de soupape destiné à commander l'écoulement entre un canal d'écoulement principal (18) et au moins un canal d'écoulement (19, 20) avec un piston de soupape (5) de forme cylindrique disposé dans un alésage d'un bloc de soupape (1) et/ou d'un couvercle de soupape (2), d'une façon mobile entre une position de fermeture et au moins une position d'ouverture, dans lequel une chambre annulaire (23) est disposée entre le piston de soupape (5) et le bloc de soupape (1) et/ou le couvercle de boîtier (2) et cette chambre annulaire présente un canal de liaison pouvant être parcouru (25) vers le canal d'écoulement principal (18), **caractérisé en ce qu'**une chambre d'extrémité (27) limitée d'un côté par une face d'extrémité (26) du piston de soupape (5) opposée à la face transversale active (24, 24', 24") est fluidiquement séparée des canaux d'écoulement (18, 19, 20).

2. Dispositif de soupape selon la revendication 1, **caractérisé en ce que** la chambre annulaire (23) présente une face de compensation (22) sur le piston de soupape (5), laquelle correspond par sa dimension à une face transversale active (24, 24', 24") du piston de soupape (5) associée au canal d'écoulement principal (18), dans lequel, dans des conditions d'utilisation prévues, la pression du canal d'écoulement principal (18) agit sur la face de compensation (22) dans une direction qui est opposée à la direction de la pression, qui agit sur la face transversale active (24, 24', 24").

3. Dispositif de soupape selon la revendication 1 ou 2, **caractérisé en ce qu'**un système de mesure de déplacement (7) est disposé sur la face d'extrémité (26) du piston de soupape (5).

4. Dispositif de soupape selon une des revendications 2 à 3, **caractérisé en ce que** la face de compensation (22) est plus petite que la face transversale active (24, 24', 24").

5. Dispositif de soupape selon une des revendications 1 à 4, **caractérisé en ce que** le piston de soupape (5) est monté directement dans le bloc de soupape (1) et/ou dans le couvercle de boîtier (2).

6. Dispositif de soupape selon une des revendications 1 à 5, **caractérisé en ce que** le piston de soupape (5) présente plusieurs étages (10, 13, 21) sur sa surface latérale cylindrique et forme ainsi plusieurs chambres annulaires (12, 15, 23) entre le piston de soupape (5) et le bloc de soupape (1) et/ou le couvercle de boîtier (2).

7. Dispositif de soupape selon la revendication 6, **caractérisé en ce qu'**une première chambre annulaire (12) est ou peut être reliée à une soupape pilote (8) pour la commande du piston de soupape (5) entre la position de fermeture et la position d'ouverture et **en ce qu'**une deuxième chambre annulaire (15) et/ou la chambre d'extrémité (27) est ou peut être reliée à la soupape pilote (8) pour la commande du piston de soupape (5) entre La position de fermeture et la position d'ouverture.

8. Dispositif de soupape selon l'une quelconque des revendications 1 à 7, **caractérisé en ce que**, dans des conditions d'utilisation prévues, la chambre d'extrémité (27) est sans pression ou est au maximum soumise à la pression de commande par la soupape pilote (8).

9. Procédé pour commander et/ou réguler un écoulement de fluide avec un dispositif de soupape selon l'une quelconque des revendications 1 à 8, comprenant le déplacement du piston de soupape (5) d'une position, dans laquelle le canal d'écoulement principal (18) est séparé des canaux d'écoulement (19, 20), à une position dans laquelle le canal d'écoulement principal (18) est relié à un des canaux d'écoulement (19, 20), le déplacement du piston de soupape (5) étant effectué avec compensation de la force exercée sur le piston de soupape (5) par une pression dans la chambre annulaire (23) reliée au canal d'écoulement principal (18) par le canal de liaison (25) et par séparation fluidique de la chambre d'extrémité (27) des canaux d'écoulement (18, 19, 20).

10. Utilisation d'un dispositif de soupape selon l'une quelconque des revendications 1 à 8 pour la commande et/ou la régulation d'un écoulement de soupape.

11. Utilisation d'un dispositif de soupape selon l'une quelconque des revendications 1 à 8 avec un système de mesure de déplacement, qui présente une pression de fonctionnement maximale admissible, dans des courants de fluide avec des pressions, qui dépassent la pression de fonctionnement maximale admissible du système de mesure de déplacement.

12. Utilisation selon la revendication 11, **caractérisée en ce que** le système de mesure de déplacement est un système de mesure de déplacement LVDT avec une pression de fonctionnement maximale jusque 350 bar, en particulier jusque 400 bar, de préférence jusque 450 bar.

13. Utilisation selon la revendication 11 ou 12 pour le raccourcissement du temps de réponse d'une soupape de régulation.
